# EUROPÄISCHE PATENTSCHRIFT

(11) **EP 1 649 573 B1**
(45) Veröffentlichungstag und Bekanntmachung des Hinweises auf die Patenterteilung: **31.12.2008**
(21) Anmeldenummer: 04738843.4
(22) Anmeldetag: 29.06.2004
(51) Int. Cl.: H02J 3/00

(54) **VERFAHREN ZUR BESTIMMUNG EINES EINE AUSLASTUNG VON ELEKTRISCHEN PRIMÄRKOMPONENTEN ANGEBENDEN AUSLASTUNGSKENNWERTES**
METHOD FOR DETERMINING A CHARGE CHARACTERISTIC INDICATING ELECTRIC PRIMARY COMPONENTS
PROCEDE DE DETERMINATION D'UNE CARACTERISTIQUE D'UTILISATION INDIQUANT LE COEFFICIENT D'UTILISATION DE COMPOSANTS ELECTRIQUES PRIMAIRES

(30) Priorität: 25.07.2003 DE 10334694
(43) Veröffentlichungstag der Anmeldung: 26.04.2006
(73) Patentinhaber: SIEMENS AKTIENGESELLSCHAFT, 80333 München (DE)
(72) Erfinder: ERKENS, Ingo, 90518 Altdorf-Grünsberg (DE)
(86) Internationale Anmeldenummer: PCT/DE2004/001400
(87) Internationale Veröffentlichungsnummer: WO 2005/015706

(56) Entgegenhaltungen:
- DE-A- 4 107 207
- DE-A- 10 050 147
- US-A- 5 406 495
- US-A1- 2002 107 589

## Beschreibung

Zum Steuern und Überwachen automatisierter Prozesse werden heutzutage üblicherweise sogenannte Automatisierungsanlagen eingesetzt. Bei den automatisierten Prozessen kann es sich beispielsweise um verfahrenstechnische Prozesse, automatisierte Herstellungsprozesse und Verteilungssysteme für elektrische Energie, wie z. B. elektrische Energieversorgungsleitungen oder elektrische Energieversorgungsnetze, handeln. Solche automatisierten Prozesse weisen Primärkomponenten, also dem Prozess unmittelbar zugehörige Komponenten, auf; im Fall einer elektrischen Energieverteilungsanlage kann es sich bei solchen Primärkomponenten z. B. um Energieversorgungsleitungen, Leistungsschalter, Generatoren, Umrichter und Transformatoren handeln.

Eine Automatisierungsanlage für einen automatisierten Prozess umfasst üblicherweise mit den Primärkomponenten des jeweiligen Prozesses verbundene, in Prozessnähe angeordnete Feldgeräte, die mittels geeigneter Messumformer, wie beispielsweise Durchfluss- und Konzentrationsmessgeräten sowie Strom- und Spannungswandlern, bestimmte Messdaten aus dem Prozess gewinnen. Auf Grundlage dieser Messdaten kann eine Überwachung und Steuerung des Prozesses erfolgen. Die Messdaten können beispielsweise an geeignete Ausgabegeräte, wie z. B. Bildschirmanzeigen, weitergeleitet und dort etwa in Form von Graphiken oder Tabellen dem Bedienpersonal des jeweiligen Prozesses dargestellt werden.

Neben den eigentlichen Messdaten können Feldgeräte auch z. B. Informationen über den jeweiligen Betriebszustand der mit ihnen verbundenen Primärkomponenten liefern. Beispielsweise ist hierzu aus der deutschen Offenlegungsschrift DE 100 50 147 A1 bekannt, einen den Zustand von Maschinen angebenden Wert durch Berechnung statistischer Kennwerte aus von dem Feldgerät aufgenommenen - teilweise rechnerisch weiterverarbeiteten - Messdaten zu gewinnen. Solche statistischen Kennwerte sind gemäß der Offenlegungsschrift beispielsweise Mittelwerte, Maximal- bzw. Minimalwerte, Standardabweichungen und Varianzen. Zur Charakterisierung des Maschinenzustandes werden jeweils für aufeinanderfolgende Zeitabschnitte berechnete statistische Kennwerte aneinandergefügt; anhand der zeitlichen Veränderung dieser Kennwerte wird ein Maß z. B. für Alterung bzw. Verschleiß der jeweiligen Primärkomponente gefunden.

Aus der US-Patentschrift US 6,490,506 B1 ist ferner ein Verfahren bekannt, bei dem an einer Turbine mittels Sensoren verschiedene Messwerte, wie z. B. der Massenstrom einer Flüssigkeit durch die Turbine, erfasst werden. Diese Messwerte werden einem Kontrollgerät zugeführt, in dem beispielsweise die Arbeitseffizienz der Turbine oder ihre Abnutzung bestimmt werden.

Der Erfindung liegt die Aufgabe zugrunde, Angaben über den aktuellen Belastungszustand von Primärkomponenten eines elektrischen Energieversorgungssystems möglichst einfach zu gewinnen.

Zur Lösung dieser Aufgabe wird erfindungsgemäß ein Verfahren zur Bestimmung eines eine Auslastung von elektrischen Primärkomponenten eines elektrischen Energieverteilungsnetzes angebenden Auslastungskennwertes vorgeschlagen, bei dem folgende Schritte durchgeführt werden:
- Aufnehmen von einen Betriebszustand der Primärkomponente beschreibenden Beschreibungswerten mittels eines Sensors, der mit einem Funktionen zur Automatisierung des Energieverteilungsnetzes ausführenden Feldgerät verbunden ist, gekennzeichnet durch:
- Bestimmen einer Gesamtsumme der Beschreibungswerte über die Dauer mindestens eines vorgebbaren Zeitintervalls unter Bildung eines Auslastungs-Zwischenwertes und
- Erzeugen des Auslastungs-Kennwertes in Abhängigkeit von der Größe des Auslastungs-Zwischenwertes im Vergleich zu einem vorgebbaren Auslastungs-Grenzwert.

Der wesentliche Vorteil des erfindungsgemäßen Verfahrens liegt darin, dass mittels einfacher Rechenoperationen in Form einer Summenbildung der Beschreibungswerte über einen vorgegebenen Zeitbereich und eines Wertevergleichs, also z. B. einer Quotientenbildung aus dem Auslastungs-Zwischenwert und dem Auslastungs-Grenzwert, eine Information über den momentanen Auslastungszustand der jeweiligen Primärkomponente eines Energieverteilungsnetzes angegeben werden kann. Mittels einer solchen Information kann z. B. der Energiefluss in einem Energieversorgungsnetz gleichmäßiger verteilt und das gesamte Netz dadurch effektiver und kostengünstiger betrieben werden. Als Beschreibungswerte sollen in diesem Zusammenhang insbesondere Messwerte einer Primärmessgröße, aber auch z. B. Zählwerte zum Zählen beispielsweise von Schaltspielen eines Schalters angesehen werden. Beschreibungswerte können in analoger oder digitaler Form vorliegen.

Als vorteilhafte Weiterbildung kann bei dem erfindungsgemäßen Verfahren vorgesehen sein, dass der Auslastungs-Kennwert von dem Feldgerät oder einer mit dem Feldgerät verbundenen Datenverarbeitungseinrichtung ausgegeben wird. Auf diese Weise kann der Auslastungs-Kennwert ohne größeren zusätzlichen Aufwand, z. B. für spezielle Ausgabesysteme, von dem Feldgerät selbst oder einer heutzutage üblicherweise mit diesem verbundenen Datenverarbeitungseinrichtung ausgegeben werden. Eine Ausgabe ist beispielsweise visuell oder akustisch möglich.

Ferner kann gemäß einer weiteren vorteilhaften Ausbildung des erfindungsgemäßen Verfahrens vorgesehen sein, dass von dem Feldgerät oder einer mit dem Feldgerät verbundenen Datenverarbeitungseinrichtung abhängig von der Größe des Auslastungs-Kennwertes ein Auslastungs-Signal erzeugt und ausgegeben wird, wenn der Auslastungs-Kennwert eine besonders geringe und/oder eine besonders hohe Auslastung der Primärkomponente angibt. Auf diese Weise kann beispielsweise dann eine Warnmeldung in Form des Auslastungs-Signals für das Bedienpersonal einer Automatisierungsanlage erzeugt werden, wenn die entsprechende Komponente nur sehr gering oder nahe ihrer Belastungsgrenze ausgelastet ist. Selbstverständlich ist im Rahmen der Erfindung auch die Erzeugung mehrerer Auslastungs-Signale beispielsweise in unterschiedlicher Form oder für verschiedene Empfänger möglich.

Gemäß einer vorteilhaften Weiterbildung des erfindungsgemäßen Verfahrens wird ein in einer Automatisierungsanlage bereits vorhandener Sensor zum Aufnehmen der Beschreibungswerte mitausgenutzt. Auf diese Weise muss zur Erfassung des Auslastungs-Kennwertes kein zusätzlicher Sensor, wie z. B. ein Messumformer, mit dem Feldgerät verbunden werden, so dass kein Aufwand bzw. keine Kosten für zusätzliche Bauteile nötig werden. Übliche, bereits vorhandene Funktionen des Feldgerätes können beispielsweise Schutz- und Überwachungsfunktionen oder Aufzeichnungsfunktionen sein.

Gemäß einer vorteilhaften Ausgestaltung des erfindungsgemäßen Verfahrens werden als Beschreibungswerte Messwerte einer Primärgröße verwendet. Vorteilhafterweise kann hierbei als Primärmessgröße ein durch die Primärkomponente fließender Strom verwendet werden. Strommesswerte stellen gängige und häufig verwendete Messgrößen in elektrischen Energieversorgungssystemen dar.

Ebenso ist vorteilhafterweise auch denkbar, dass als Primärmessgröße eine an der Primärkomponente anliegende Spannung verwendet wird. Spannungsmesswerte stellen ebenfalls gängige und häufig verwendete Messgrößen in elektrische Energieversorgungssysteme dar. Außerdem dazu kann als Primärmessgröße vorteilhafterweise auch eine Temperatur der Primärkomponente verwendet werden. Auch mit Hilfe von Temperaturmesswerten lässt sich vergleichsweise einfach eine Auslastung bestimmter Primärkomponenten, wie beispielsweise elektrischer Versorgungsleitungen oder Transformatoren, angeben.

Eine weitere vorteilhafte Ausführungsform des erfindungsgemäßen Verfahrens ist dadurch gegeben, dass die Erzeugung des Auslastungs-Kennwertes wiederholt durchgeführt wird und aufeinanderfolgende Auslastungs-Zwischenwerte in einem Summenspeicher unter Bildung eines Alterungs-Kennwertes aufsummiert werden. Auf diese Weise kann besonders einfach unter Aufsummierung aufeinanderfolgend ermittelter Auslastungs-Kennwerte ein eine Alterung der jeweiligen Primärkomponente angebender Alterungs-Kennwert gebildet werden. Ein solcher Alterungs-Kennwert kann beispielsweise dafür verwendet werden, um einen optimalen Wartungszeitpunkt für die Primärkomponente zu bestimmen.

Hierbei wird es ferner als vorteilhaft angesehen, wenn der Alterungs-Kennwert von dem Feldgerät oder einer mit dem Feldgerät verbundenen Datenverarbeitungseinrichtung ausgegeben wird. Auf diese Weise kann ohne weiteren Aufwand der Alterungs-Kennwert vorteilhaft ausgegeben werden. Eine Ausgabe kann analog zu dem Auslastungs-Kennwert visuell oder akustisch erfolgen.

Außerdem wird es hierbei als vorteilhaft angesehen, wenn abhängig von der Größe des Alterungs-Kennwertes im Vergleich zu einem vorgegebenen Alterungs-Grenzwert von dem Feldgerät oder einer mit dem Feldgerät verbundenen Datenverarbeitungseinrichtung ein Alterungs-Signal erzeugt wird und das Alterungs-Signal von dem Feldgerät oder der Datenverarbeitungseinrichtung ausgegeben wird. Auf diese Weise kann ein entsprechendes Signal beispielsweise dann erzeugt werden, wenn eine Wartung der entsprechenden Primärkomponente in naher Zukunft erfolgen muss. Hierdurch werden unnötige Wartungsarbeiten oder Überprüfungen der Primärkomponente größtenteils vermieden. Die Erzeugung von mehreren Alterungs-Signalen ist analog zur Erzeugung von mehreren Auslastungs-Signalen möglich.

Ferner wird es in diesem Zusammenhang als vorteilhaft angesehen, wenn der Summenspeicher bei Inbetriebnahme der Primärkomponente auf den Wert Null gesetzt wird. Dies eignet sich insbesondere bei Primärkomponenten, die zum ersten Mal in Betrieb genommenen werden.

Alternativ dazu kann es bei Primärkomponenten, die bereits schon einmal in Betrieb waren oder eine längere Zeitdauer gelagert wurden, vorteilhaft sein, dass der Summenspeicher bei Inbetriebnahme der Primärkomponente auf einen eine vergangene Benutzung der Primärkomponente berücksichtigenden Startwert gesetzt wird.

Eine vorteilhafte Weiterbildung des erfindungsgemäßen Verfahrens sieht außerdem vor, dass bei einem Leistungsschalter als Primärkomponente die Beschreibungswerte nur jeweils während eines Öffnens von Schaltkontakten des Leistungsschalters ermittelt werden. Auf diese Weise können bei einem Leistungsschalter Auslastungs-Kennwerte bzw. ein eventuell erzeugter Alterungs-Kennwert ausschließlich anhand des den Leistungsschalter aufgrund einer Lichtbogenbildung besonders stark belastenden Zeitraums während des Öffnens seiner Schaltkontakte erzeugt werden.

Ferner kann es vorteilhaft sein, wenn bei einem Leistungsschalter als Primärkomponente von dem Feldgerät auch die Anzahl von dem Leistungsschalter durchgeführter Schaltvorgänge bestimmt wird, aus dieser Anzahl der Schaltvorgänge ein Alterungs-Schaltwert bestimmt und der Alterungs-Schaltwert oder eine von diesem abgeleitete Warnmeldung von dem Feldgerät oder einer mit dem Feldgerät verbundenen Datenverarbeitungseinrichtung ausgegeben wird. Auf diese Weise kann die Alterung eines Leistungsschalters auch anhand von bereits durchgeführten Schaltvorgängen angezeigt werden.

Zur näheren Erläuterung der Erfindung sind in
- Figur 1: in einem Blockschaltbild ein Ausführungsbeispiel eines an ein Energieübertragungsnetz angeschlossenen Feldgerätes zur Erzeugung eines Auslastungs-Kennwertes, in
- Figur 2: in einem Blockschaltbild ein weiteres Ausführungsbeispiel eines an ein Energieübertragungsnetz angeschlossenen Feldgerätes zur Erzeugung eines Auslastungs-Kennwertes und eines Alterungs-Kennwertes, in
- Figur 3: ein Verfahrensschema eines Ausführungsbeispiels eines Verfahrens zur Bestimmung eines Auslastungs-Kennwertes und in
- Figur 4: ein weiteres Ausführungsbeispiel eines an ein Energieübertragungsnetz angeschlossenen Feldgerätes in einem Blockschaltbild dargestellt.

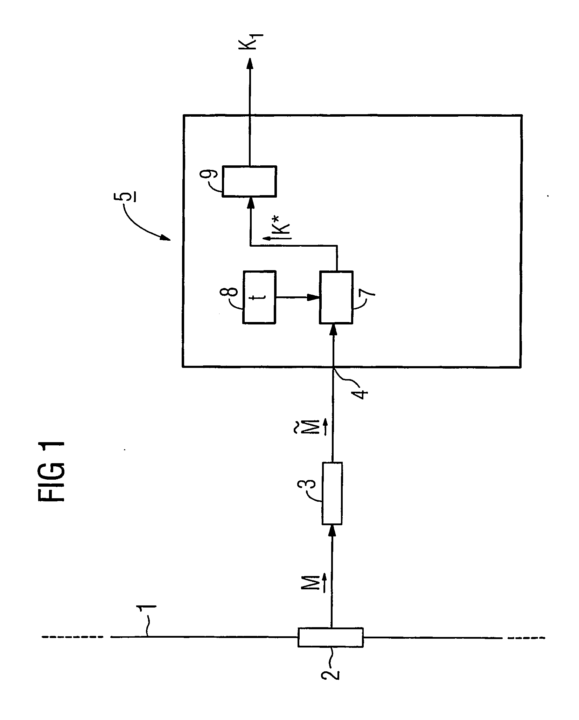

Figur 1 zeigt schematisch in einem Blockschaltbild ein Ausführungsbeispiel eines Feldgerätes zur Erzeugung eines eine Auslastung einer Primärkomponente in einem elektrischen Energieversorgungsnetz angebenden Auslastungs-Kennwertes. Ein Leitungsabschnitt 1 eines im weiteren nicht gezeigten Energieübertragungsnetzes oder einer Energieübertragungsleitung weist eine nur schematisch angedeutete Primärkomponente 2 auf. Bei dieser Primärkomponente kann es sich beispielsweise um einen Leitungsteil des Leitungsabschnittes 1, einen Transformator, einen Leistungsschalter, einen Generator oder einen Umrichter handeln. Als Primärkomponenten sind die beispielhaft aufgeführten Komponenten Teil des Energieübertragungsnetzes selbst. Die Primärkomponente 2 ist mit einem in Figur 1 nur schematisch angedeuteten Sensor 3, z. B. einem Messumformer, verbunden, der wiederum ausgangsseitig mit einem Eingang 4 eines Feldgerätes 5 verbunden ist. Das Feldgerät 5 ist beispielsweise Teil einer Automatisierungsanlage zur Automatisierung des Energieversorgungsnetzes. Der Eingang 4 des Feldgerätes 5 ist mit einem Summationsbaustein 7 verbunden, der zudem an einem Steuereingang mit einem Zeitgeber 8 verbunden ist. Der Summationsbaustein 7 ist ferner ausgangsseitig mit einem ersten Grenzwertbaustein 9 verbunden.

Die Funktionsweise der in Figur 1 dargestellten Anordnung wird im Folgenden beschrieben. Mittels des Sensors 3 werden zur Beschreibung des Betriebszustandes der Primärkomponente 2 geeignete Primärbeschreibungswerte M, z. B. Primärmesswerte einer Primärmessgröße, also einer direkt an der Primärkomponente erfassbaren Messgröße, aufgenommen. Als Primärmessgröße kann in einem solchen Fall beispielsweise die Temperatur der Primärkomponente, eine auf dieser anliegende Spannung oder ein durch die Primärkomponente fließender Strom in Frage kommen. Auf Strom und Spannung basierende Primärgrößen können beispielsweise als Momentanwerte, Effektivwerte, Maximalwerte oder Durchschnittswerte vorliegen. Ferner wären als Primärmessgrößen auch die Luftfeuchtigkeit oder bei drehenden Maschinen wie Generatoren auch ein an einer Welle anliegendes Drehmoment oder deren Umdrehungsgeschwindigkeit denkbar. Andere Primärbeschreibungswertre können beispielsweise Zählwerte, die die Anzahl von Schaltspielen einer Schaltkomponente angeben, sowie Ereignissignale, die beispielsweise das Überschreiten eines Grenzwertes anzeigen, sein. Primärbeschreibungswerte können in analoger oder digitaler Form vorliegen. Die Primärbeschreibungswerte M werden von dem Sensor 3 aufgenommen und in zu den Primärbeschreibungswerten M proportionale Messwerte M̃ umgesetzt. Zudem kann im Zuge dieser Umsetzung durch den Sensor 3 wenn nötig auch eine Digitalisierung der Primärbeschreibungswerte M vorgenommen werden, so dass die Beschreibungswerte M̃ in digitaler Form übertragen werden können. Die Beschreibungswerte M̃ werden daraufhin dem Eingang 4 des Feldgerätes 5 zugeführt und gelangen weiter zum Eingang des Summationsbausteins 7, wo der zeitliche Verlauf der Beschreibungswerte M̃ während eines von dem Zeitgeber 8 vorgegebenen Zeitintervalls aufsummiert wird. Als Ergebnis der Summation gibt der Summationsbaustein 7 an seinem Ausgang einen Auslastungs-Zwischenwert K* aus, der dem Grenzwertbaustein 9 zugeführt wird. Dieser vergleicht den Auslastungs-Zwischenwert K* mit einem vorgebbaren Auslastungs-Grenzwert und erzeugt in Abhängigkeit des Ergebnisses dieses Vergleichs einen Auslastungs-Kennwert K₁. Beispielsweise kann auf diese Weise ein großer Auslastungs-Kennwert K₁ erzeugt werden, wenn das Verhältnis des Auslastungs-Zwischenwertes K* zum Auslastungs-Grenzwert nahe 1 ist; umgekehrt kann ein kleiner Auslastungs-Kennwert K₁ erzeugt werden, wenn dieses Verhältnis nahe 0 ist.

Der Auslastungs-Kennwert K₁ kann mittels einer in Figur 1 nicht weiter dargestellten Ausgabeeinrichtung von dem Feldgerät ausgegeben wird. Bei der Ausgabeeinrichtung kann es sich beispielsweise um eine Einrichtung zur visuellen Anzeige des Auslastungs-Kennwertes K₁, wie ein Display oder einen Bildschirm, oder um eine Einrichtung zur akustischen Ausgabe des Auslastungs-Kennwertes, wie beispielsweise ein Signalhorn oder einen Lautsprecher, handeln.

Mit Hilfe eines solchermaßen erzeugten Auslastungs-Kennwertes K₁ ist es für das Bedienpersonal der Automatisierungsanlage für das Energieversorgungsnetz leicht möglich, die Auslastung spezieller Primärkomponenten optimieren. So können beispielsweise mit Hilfe des Auslastungs-Kennwertes K₁ wenig belastete Leitungsabschnitte des Energieversorgungsnetzes erkannt und als Folge darauf mehr elektrische Leistung auf solche Leitungsabschnitte verteilt werden. Analog lassen sich sehr schwach bzw. stark belastete Transformatoren, Generatoren und andere Primärkomponenten des Energieversorgungsnetzes ausmachen, und durch eine Umverteilung elektrischer Leistung - sofern dies möglich ist - eine insgesamt gleichmäßigere Auslastung des gesamten Energieversorgungsnetzes erzielen. Hiermit lässt sich ein Energieversorgungsnetz insgesamt effektiver und damit auch deutlich kostengünstiger betreiben.

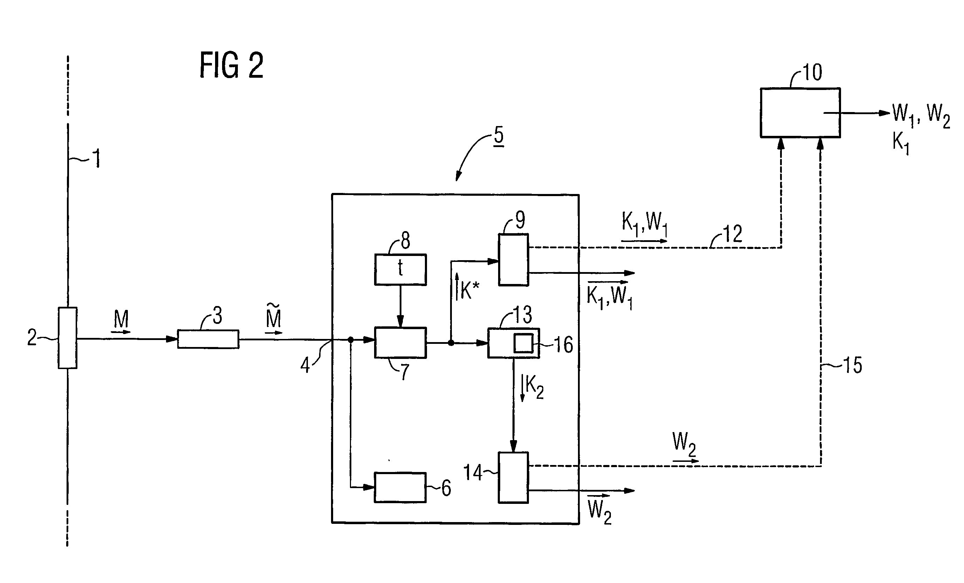

Figur 2 zeigt ein weiteres Ausführungsbeispiel eines Feldgerätes zur Erzeugung eines Auslastungs-Kennwertes und eines daraus ermittelten Alterungs-Kennwertes. Die wesentliche Funktionsweise zur Erzeugung des Auslastungskennwertes ist dieselbe wie schon zur Figur 1 erläutert. Die sich entsprechenden Bauteile sind daher mit gleichen Bezugszeichen gekennzeichnet.

Im Folgenden werden die im Vergleich zu Figur 1 hinzugekommenen Funktionen des Feldgerätes 5 beschrieben. Gemäß Figur 2 wird abhängig von der Größe des Auslastungs-Kennwertes K₁ von dem Grenzwertbaustein 9 auch ein oder mehrere Auslastungs-Signale W₁ erzeugt, wenn der Auslastungskennwert K₁ sehr hoch bzw. sehr niedrig ist. Ein solches Auslastungs-Signal W₁ kann entweder direkt an dem Feldgerät 5, beispielsweise visuell oder akustisch, ausgegeben oder einem Eingang einer beispielsweise in einer zentralen Leitstelle angeordneten Datenverarbeitungseinrichtung 10 über eine hierzu geeignete Kommunikationsleitung 12 zugeführt werden. Mittels der Datenverarbeitungseinrichtung 10 kann das Auslastungs-Signal W₁ weiterverarbeitet oder wiederum in geeigneter Weise ausgegeben werden. Es ist ferner ebenso möglich, dass der Auslastungs-Kennwert K₁ von dem Feldgerät 5 direkt an die Datenverarbeitungseinrichtung 10 ausgegeben wird, die nach einem Vergleich mit einem Auslastungs-Grenzwert analog zu der Funktion des Grenzwertbausteins 9 entweder den Auslastungs-Kennwert K₁ direkt anzeigt oder ein Auslastungs-Signal W₁ ausgibt. Der letztgenannte Fall entspräche somit einer Verlagerung der Signalerzeugung in die Datenverarbeitungseinrichtung 10.

Das Auslastungs-Signal W₁ kann abhängig von der Größe des Auslastungs-Kennwertes K₁ beispielsweise dann erzeugt werden, wenn die Primärkomponente nur sehr gering ausgelastet ist. Ebenso kann das Auslastungs-Signal W₁ bei sehr hoher Auslastung der Primärkomponente erzeugt werden. Möglich ist auch eine Kombination beider Auslösebedingungen für das Auslastungs-Signal W₁; es wird in diesem Fall also bei niedriger und bei hoher Auslastung der Primärkomponente erzeugt.

Ferner ist es möglich, das Auslastungssignal W₁ beispielsweise in Form einer Art Ampel anzuzeigen, bei der eine rote Anzeige eine Auslastung der Primärkomponente nahe ihrer Auslastungsgrenze, eine gelbe Lampe eine Auslastung der Primärkomponente in einem mittleren Auslastungsbereich und eine grüne Lampe eine sehr geringe Auslastung der Primärkomponente anzeigt. Es liegt auf der Hand, dass eine solche Anzeige jeweils entsprechend den jeweiligen Anforderungen beispielsweise farblich modifiziert werden kann.

Eine weitere in Figur 2 im Vergleich zu Figur 1 im Feldgerät 5 hinzugekommene Funktion besteht in der Erzeugung eines sogenannten Alterungs-Kennwertes K₂ für die Primärkomponente 2. Hierzu werden die von dem Summationsbaustein 7 während aufeinanderfolgender Zeiträume generierten Auslastungs-Zwischenwerte K* nacheinander einem Summenspeicher 13 zugeführt, in dem sie wiederum aufaddiert werden. Als Ergebnis dieser Summation entsteht ein jeweiliger Alterungs-Kennwert K₂, der an einem Ausgang des Summenspeichers 13 ausgegeben wird. Dieser Alterungs-Kennwert K₂ gibt damit sozusagen die bis zum aktuellen Zeitpunkt akkumulierte Auslastung der jeweiligen Primärkomponente an und kann somit zur Bestimmung der Alterung der Primärkomponente 2 herangezogen werden. Beispielsweise lässt sich mit seiner Hilfe ein optimaler Zeitpunkt für eine Wartung, eine Reparatur oder ein Auswechseln der Primärkomponente 2 bestimmen. Der Alterungs-Kennwert K₂ kann entweder vom Feldgerät 5 direkt ausgegeben werden (dies ist in Figur 2 in dieser Form nicht dargestellt) oder zunächst einem weiteren Grenzwertbaustein 14 zugeführt werden, der einen Vergleich des Alterungs-Kennwertes K₂ mit einem vorgegebenen Alterungs-Grenzwert durchführt. Jeweils abhängig von der Größe des Alterungs-Kennwertes K₂ im Vergleich zu diesem Alterungs-Grenzwert kann ein Alterungs-Signal W₂ erzeugt werden, das wiederum analog zu dem Auslastungs-Signal W₁ entweder direkt vom Feldgerät 5 oder nach Übermittlung zu der Datenverarbeitungseinrichtung 10 über eine geeignete Übertragungsleitung 15 von der Datenverarbeitungseinrichtung 10 ausgegeben wird. Das Alterungs-Signal W₂ kann beispielsweise angeben, ob eine Wartung der Primärkomponente 2 notwendig ist oder ggf. die gesamte auslastungsspezifische Lebensdauer der Primärkomponente 2 bald erreicht ist und diese somit ausgewechselt werden muss. Eine visuelle Anzeige des Alterungs-Signals W₂ kann beispielsweise wiederum in Form einer Ampelanzeige (z.B. grün: geringe Alterung, gelb: mittlere Alterung, rot: nahe der Altersgrenze bzw. "Wartung erforderlich") erfolgen.

Der weitere Grenzwertbaustein 14 kann auch von dem Feldgerät 5 in die Datenverarbeitungseinrichtung 10 verlagert sein.

Der Summenspeicher 13 weist einen Anfangswertbereich 16 auf, in den ein Startwert für die Addition der Auslastungs-Zwischenwerte K* zur Bildung des Alterungs-Kennwertes K₂ eingetragen werden kann. Bei einer neuen (ungebrauchten) Primärkomponente wird als Startwert hier üblicherweise Null eingetragen werden, da die gesamte auslastungsspezifische Lebensdauer der Komponente noch in der Zukunft liegt. Ist die Primärkomponente bereits schon einmal eingesetzt worden, oder hat eine sonstige Alterung der Primärkomponente beispielsweise durch widrige Umwelteinflüsse, wie hohe Luftfeuchtigkeit oder Temperatur während einer Lagerung der Primärkomponente, stattgefunden, lässt sich der Startwert auch auf einen von Null verschiedenen Wert setzen, um anzuzeigen, dass bereits eine gewisse Alterung der Primärkomponente stattgefunden hat. Hierdurch verkürzt sich gleichzeitig die noch ausstehende auslastungsspezifische Lebensdauer der Primärkomponente bis zum Erreichen ihrer maximalen Alterungsgrenze.

In Figur 2 ist ferner ein Funktionsblock 6 dargestellt, mit dem das Feldgerät 5 weitere Automatisierungsfunktionen für das Energieversorgungsnetz bzw. die Primärkomponente 2 durchführen kann. Beispielsweise können solche Funktionen Schutzfunktionen zur Überwachung der Einhaltung bestimmter Betriebsparameter durch die Primärkomponente 2 sein; es kann sich aber auch um eine Aufzeichnungsfunktion zur Aufnahme und Speicherung zeitlicher Verläufe der Beschreibungswerte M̃ handeln. Wie in Figur 2 ersichtlich ist der Funktionsblock 6 eingangsseitig von denselben Beschreibungswerten M̃ beaufschlagt, die auch zur Bestimmung des Auslastungs-Kennwertes K₁ verwendet werden. Auf diese Weise lassen sich besonders vorteilhaft mehrere Funktionen des Feldgerätes anhand z. B. von Messwerten nur einer einzigen Messgröße, beispielsweise einem Stromeffektivwert, ausführen, so dass etwa bei Erweiterung eines Feldgerätes, das bereits die in dem Funktionsblock 6 enthaltenden Funktionen ausführen kann, durch eine weitere Funktion zur Erzeugung des Auslastungs-Kennwertes K₁ bzw. auch des Alterungs-Kennwertes K₂ keine weiteren Bauteile wie zusätzliche Sensoren oder Messumformer nötig werden. Auf diese Weise lassen sich also ohne zusätzliche Kosten der Auslastungs-Kennwert K₁ bzw. der Alterungs-Kennwert K₂ erzeugen.

Die in den Figuren 1 und 2 gezeigten Komponenten des Feldgerätes, beispielsweise der Summationsbaustein 7, der Zeitgeber 8 und die Grenzwertbausteine 9 und 14, sind in diesem Zusammenhang lediglich als Funktionsbausteine zu betrachten, müssen also nicht durch gegenständliche Komponenten des Feldgerätes 5 ausgeführt sein. Vielmehr ist es heute üblich, solche Funktionsbausteine in Form einer Steuersoftware für das Feldgerät 5 auszubilden. Einzelne Module der Steuersoftware würden dann die Funktionen der angesprochenen Funktionsbausteine übernehmen.

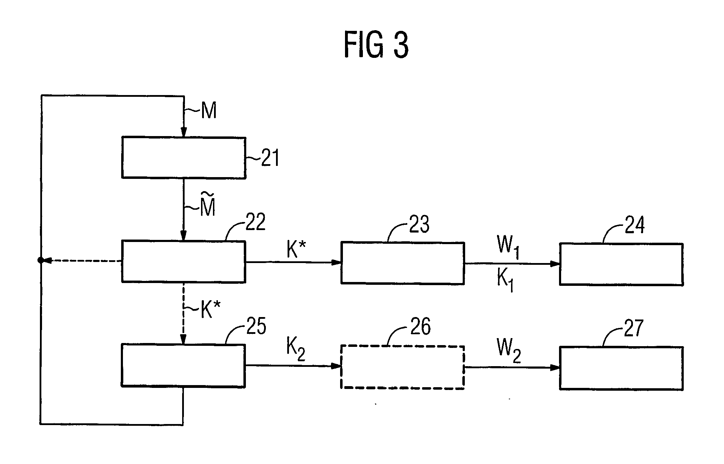

In Figur 3 ist in Form eines schematischen Fließbildes nochmals ein Verfahren zur Erzeugung eines Auslastungs-Kennwertes K₁ sowie eines Alterungs-Kennwertes K₂ beispielhaft dargestellt.

In einem Erfassungsschritt 21 werden Primärbeschreibungswerte M erfasst und nach Umformung und ggf. Digitalisierung als Beschreibungswerte M̃ an einen Summationsschritt 22 übergeben. In diesem Summationsschritt 22 wird durch Summation der Beschreibungswerte M̃ über eine vorgegebene Zeitdauer ein Auslastungs-Zwischenwert K* erzeugt. Dieser wird einem Vergleichsschritt 23 zugeführt, wo er mit einem Auslastungs-Grenzwert verglichen und anhand der Größe des Auslastungs-Zwischenwertes K* im Vergleich zum Auslastungs-Grenzwert ein Auslastungs-Kennwert K₁ erzeugt wird. Außerdem kann optional bei sehr großen oder kleinen Auslastungs-Kennwerten K₁ ein Auslastungs-Signal W₁ erzeugt werden. Der Auslastungs-Kennwert K₁ und ggf. das Auslastungs-Signal W₁ werden in einem diesen Zweig des in Figur 3 dargestellten Verfahrens abschließenden Ausgabeschritt 24 in geeigneter Form ausgegeben.

Parallel zur Ausgabe des Auslastungs-Kennwertes K₁ bzw. des Auslastungs-Signals W₁ im Ausgabeschritt 24 kann ferner der Durchlauf des Verfahrens bei Schritt 22 beendet werden und die Primärbeschreibungswertaufnahme beim Erfassungsschritt 21 erneut beginnen. Auf diese Weise wird eine Folge aufeinanderfolgender Auslastungs-Kennwerte K₁ bzw. Auslastungs-Signale W₁ erzeugt.

Optional kann jedoch auf Schritt 2 auch ein weiterer Summationsschritt 25 folgen, in dem nun die jeweiligen Auslastungs-Zwischenwerte K* aufaddiert werden und somit eine akkumulierte Summe der Auslastungs-Zwischenwerte K* bilden. Hierdurch wird ein sog. Alterungs-Kennwert K₂ erzeugt. Dieser Alterungs-Kennwert K₂ gibt den Verschleiß bzw. die Alterung der entsprechenden Primärkomponente an. Der Alterungs-Kennwert K₂ kann optional einem weiteren Vergleichsschritt 26 zugeführt werden, in dem der jeweilige Alterungs-Kennwert K₂ mit einem Alterungs-Grenzwert verglichen und anhand der Größe des Alterungs-Kennwertes K₂ im Vergleich zum Alterungs-Grenzwert ein Alterungs-Signal W₂ erzeugt wird, das schließlich einem weiteren Ausgabeschritt 27 zugeführt wird.

Der Grenzwertvergleich im Schritt 26 kann allerdings auch entfallen und der Alterungs-Kennwert K₂ in diesem Fall direkt im Ausgabeschritt 27 ausgegeben werden.

Auf den Schritt 25 folgend wird das Verfahren mit dem Erfassungsschritt 21 neu gestartet und ein neuer Durchlauf beginnt.

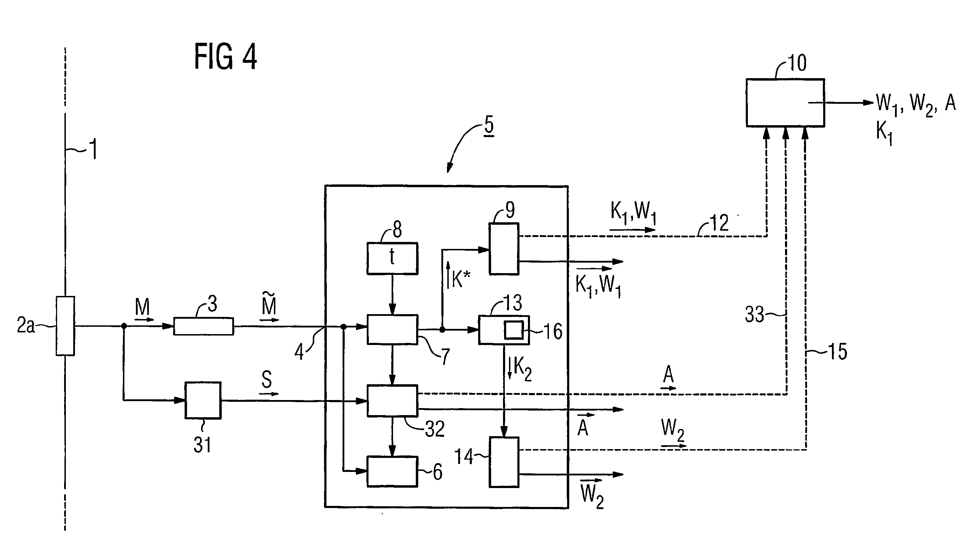

Figur 4 zeigt schließlich ein weiteres Ausführungsbeispiel eines Feldgerätes zur Erzeugung eines Auslastungs-Kennwertes. Figur 4 stimmt im Wesentlichen mit Figur 2 überein. Gleiche Komponenten sind auch hier wieder mit gleichen Bezugszeichen gekennzeichnet. Für die folgenden Betrachtungen wird davon ausgegangen, dass es sich bei der Primärkomponente 2 (vgl. z.B. Figur 1) um einen elektrischen Leistungsschalter 2a handelt.

In Figur 4 ist zusätzlich mit dem elektrischen Leistungsschalter 2a eine Schalthandlungserfassungseinrichtung 31 verbunden. Die Schalthandlungserfassungseinrichtung 31 kann, wie in Figur 4 gezeigt, mit denselben Primärbeschreibungswerten M der Primärkomponente, also des Leistungsschalters 2a, beaufschlagt sein wie der Integrationsbaustein 7; es ist aber auch denkbar, die Schalthandlungserfassungseinrichtung 31 mit anderen Primärbeschreibungswerten zu beaufschlagen. Die Schalthandlungserfassungseinrichtung 31 kann ferner auch eine Umformereinrichtung enthalten, um zu den Primärbeschreibungswerten entsprechende proportionale Beschreibungswerte zu erzeugen. Mit der Schalthandlungserfassungseinrichtung 31 werden Schaltvorgänge des Leistungsschalters 2a beispielsweise anhand charakteristischer Stromverläufe erkannt. Immer wenn eine solche Schalthandlung erfasst wird, wird ein Schaltsignal S an das Feldgerät 5 abgegeben.

Abweichend von der in Figur 4 dargestellten Anordnung kann die Schalthandlungserfassungseinrichtung 31 allerdings auch innerhalb des Feldgerätes 5 ausgebildet sein.

Das Schaltsignal S wird an einen Bewertungsbaustein 32 übermittelt, der die von dem Leistungsschalter 2a durchgeführten Schalthandlungen zählt und mit einer maximal für den Leistungsschalter 2a vorgesehenen Anzahl von Schaltvorgängen vergleicht. Der Bewertungsbaustein 32 gibt daraufhin einen Alterungs-Schaltwert A ab, der wiederum direkt am Feldgerät 5 oder nach Übermittlung über eine Kommunikationsleitung 33 an die Datenverarbeitungseinrichtung 10 von dieser ausgegeben werden kann. Der Alterungs-Schaltwert A kann dabei direkt die Anzahl der bisher durchgeführten Schaltvorgänge oder auch beispielsweise die Anzahl der noch durchführbaren Schaltvorgänge anzeigen. Eine Anzeige kann ferner analog zum Auslastungs-Kennwert K₁ und zum Alterungs-Kennwert K₂ auch in Form einer farblichen Ampelkennzeichnung dargestellt werden, bei der beispielsweise mit grün eine kleine Anzahl bereits durchgeführter Schaltvorgänge, mit gelb eine mittlere Anzahl bereits durchgeführter Schaltvorgänge und mit rot eine Anzahl durchgeführter Schaltvorgänge nahe der maximal möglichen Anzahl durchführbarer Schaltvorgänge angegeben wird.

Bei einem Leistungsschalter 2a als Primärkomponente ist ferner zur Bestimmung des Auslastungs-Kennwertes K₁ anhand beispielsweise des Effektivwertes eines durch die Schaltkontakte des Leistungsschalters fließenden Stromes insbesondere derjenige Strom zu berücksichtigen, der in Form eines Lichtbogens während des Öffnungsvorgangs des Leistungsschalters zwischen den Schaltkontakten fließt, da während dieser Zeit eine starke Belastung und Abnutzung der Schaltkontakte vorliegt, was zur Alterung des Leistungsschalters beiträgt. In einem solchen Fall erkennt beispielsweise das Feldgerät einen Öffnungsvorgang des Leistungsschalters und nimmt nur zu dieser Zeit Beschreibungswerte M zur Bestimmung des Auslastungs-Kennwertes K₁ auf. Ebenso wird der Alterungs-Kennwert K₂ für einen Leistungsschalter dann nur auf Grundlage während des Öffnens der Schaltkontakte bestimmter Auslastungs-Zwischenwerte K_{*} bestimmt.

## Patentansprüche

1. Verfahren zur Bestimmung eines eine momentane Auslastung einer elektrischen Primärkomponente (2) eines elektrischen Energieverteilungsnetzes angebenden Auslastungs-Kennwertes (K₁), bei dem folgende Schritte durchgeführt werden:
- Aufnehmen von einen Betriebszustand der Primärkomponente beschreibenden Beschreibungswerten (M̃), insbesondere Messwerten einer Primärmessgröße, mittels eines Sensors (3), der mit einem Funktionen zur Automatisierung des Energieverteilungsnetzes ausführenden Feldgerät (5) verbunden ist, **gekennzeichnet durch** :
- Bestimmen einer Gesamtsumme der Beschreibungswerte (M̃) über die Dauer mindestens eines vorgebbaren Zeitintervalls unter Bildung eines Auslastungs-Zwischenwertes (K*) und
- Erzeugen des Auslastungs-Kennwertes (K₁) in Abhängigkeit von der Größe des Auslastungs-Zwischenwertes (K*) im Vergleich zu einem vorgebbaren Auslastungs-Grenzwert.

2. Verfahren nach Anspruch 1,
**dadurch gekennzeichnet, dass**
- der Auslastungs-Kennwert (K₁) von dem Feldgerät (5) oder einer mit dem Feldgerät (5) verbundenen Datenverarbeitungseinrichtung (10) ausgegeben wird.

3. Verfahren nach Anspruch 1 oder 2,
**dadurch gekennzeichnet, dass**
- von dem Feldgerät (5) oder einer mit dem Feldgerät (5) verbundenen Datenverarbeitungseinrichtung (10) abhängig von der Größe des Auslastungs-Kennwertes (K₁) ein Auslastungs-Signal (W₁) erzeugt und ausgegeben wird, wenn der Auslastungs-Kennwert (K₁) eine besonders geringe und/oder eine besonders hohe Auslastung der Primärkomponente (2) angibt.

4. Verfahren nach einem der vorangehenden Ansprüche,
**dadurch gekennzeichnet, dass**
- ein in einer Automatisierungsanlage bereits vorhandener Sensor zum Aufnehmen der Beschreibungswerte (M) mitausgenutzt wird.

5. Verfahren nach einem der vorangehenden Ansprüche,
**dadurch gekennzeichnet, dass**
- als Beschreibungswerte (M) Messwerte einer Primärmessgröße verwendet werden.

6. Verfahren nach Anspruch 5,
**dadurch gekennzeichnet, dass**
- als Primärmessgröße ein durch die Primärkomponente (2) fließender Strom verwendet wird.

7. Verfahren nach Anspruch 5,
**dadurch gekennzeichnet, dass**
- als Primärmessgröße eine an der Primärkomponente (2) anliegende Spannung verwendet wird.

8. Verfahren nach Anspruch 5,
**dadurch gekennzeichnet, dass**
- als Primärmessgröße eine Temperatur der Primärkomponente (2) verwendet wird.

9. Verfahren nach einem der vorangehenden Ansprüche,
**dadurch gekennzeichnet, dass**
- die Erzeugung des Auslastungs-Kennwertes (K₁) wiederholt durchgeführt wird und
- aufeinanderfolgende Auslastungs-Zwischenwerte (K*) in einem Summenspeicher (13) unter Bildung eines Alterungs-Kennwertes (K₂) aufsummiert werden.

10. Verfahren nach Anspruch 9,
**dadurch gekennzeichnet, dass**
- der Alterungs-Kennwert (K₂) von dem Feldgerät (5) oder einer mit dem Feldgerät (5) verbundenen Datenverarbeitungseinrichtung (10) ausgegeben wird.

11. Verfahren nach Anspruch 9 oder 10,
**dadurch gekennzeichnet, dass**
- abhängig von der Größe des Alterungs-Kennwertes (K₂) im Vergleich zu einem vorgegebenen Alterungs-Grenzwert von dem Feldgerät (5) oder einer mit dem Feldgerät (5) verbundenen Datenverarbeitungseinrichtung (10) ein Alterungs-Signal (W₂) erzeugt wird und
- das Alterungs-Signal (W₂) von dem Feldgerät (5) oder der Datenverarbeitungseinrichtung (10) ausgegeben wird.

12. Verfahren nach einem der Ansprüche 9 bis 11,
**dadurch gekennzeichnet, dass**
- der Summenspeicher (13) bei Inbetriebnahme der Primärkomponente (2) auf den Wert Null gesetzt wird.

13. Verfahren nach einem der Ansprüche 9 bis 11,
**dadurch gekennzeichnet, dass**
- der Summenspeicher (13) bei Inbetriebnahme der Primärkomponente (2) auf einen eine vergangene Benutzung der Primärkomponente (2) berücksichtigenden Startwert gesetzt wird.

14. Verfahren nach einem der vorangehenden Ansprüche,
**dadurch gekennzeichnet, dass**
- bei einem Leistungsschalter (2a) als Primärkomponente die Beschreibungswerte (M) jeweils nur während eines Öffnens von Schaltkontakten des Leistungsschalters (2a) ermittelt werden.

15. Verfahren nach einem der vorangehenden Ansprüche,
**dadurch gekennzeichnet, dass**
- bei einem Leistungsschalter (2a) als Primärkomponente von dem Feldgerät (5) auch die Anzahl von dem Leistungsschalter (2a) durchgeführter Schaltvorgänge bestimmt wird,
- aus dieser Anzahl der Schaltvorgänge ein Alterungs-Schaltwert (A) bestimmt und
- der Alterungs-Schaltwert (A) oder eine von diesem abgeleitete Warnmeldung von dem Feldgerät (5) oder einer mit dem Feldgerät (5) verbundenen Datenverarbeitungseinrichtung (10) ausgegeben wird.

## Claims

1. Method for determination of a load characteristic (K₁), which indicates the instantaneous load level on an electrical primary component (2) in an electrical power distribution network, in which method the following steps are carried out:
- description values **(M̃),** in particular measured values of a primary measurement, which describe an operating state of the primary component are recorded by means of a sensor (3) which is connected to a field device (5) which carries out functions relating to the automation of the power distribution network, **characterized by**:
- an overall sum of the description values **(M̃)** is determined over the duration of at least one predeterminable time interval in order to form a load intermediate value (K*), and
- the load characteristic (K₁) is produced as a function of the magnitude of the load intermediate value (K*) in comparison to a predeterminable load limit value.

2. Method according to Claim 1,
**characterized in that**
- the load characteristic (K₁) is emitted from the field device (5) or from a data processing device (10) which is connected to the field device (5).

3. Method according to Claim 1 or 2,
**characterized in that**
- a load signal (W₁) is produced and emitted from the field device (5) or from a data processing device (10) which is connected to the field device (5), as a function of the magnitude of the load characteristic (K₁), when the load characteristic (K₁) indicates that the load on the primary component (2) is particularly low and/or particularly high.

4. Method according to one of the preceding claims,
**characterized in that**
- a sensor which is already present in an automation system is also used to record the description values **(M̃).**

5. Method according to one of the preceding claims,
**characterized in that**
- measured values of a primary measurement variable are used as description values **(M̃).**

6. Method according to Claim 5,
**characterized in that**
- a current which is flowing through the primary component (2) is used as the primary measurement variable.

7. Method according to Claim 5,
**characterized in that**
- a voltage which is applied to the primary component (2) is used as the primary measurement variable.

8. Method according to Claim 5,
**characterized in that**
- a temperature of the primary component (2) is used as the primary measurement variable.

9. Method according to one of the preceding claims,
**characterized in that**
- the load characteristic (K₁) is produced repeatedly, and
- successive load intermediate values (K*) are added in a sum memory (13) in order to form an aging characteristic (K₂).

10. Method according to Claim 9,
**characterized in that**
- the aging characteristic (K₂) is emitted from the field device (5) or from a data processing device (10) which is connected to the field device (5).

11. Method according to Claim 9 or 10,
**characterized in that**
- an aging signal (W₂) is produced as a function of the magnitude of the aging characteristic (K₂) in comparison to a predetermined aging limit value for the field device (5) or a data processing device (10) which is connected to the field device (5), and
- the aging signal (W₂) is emitted from the field device (5) or the data processing device (10).

12. Method according to one of Claims 9 to 11,
**characterized in that**
- the sum memory (13) is set to the value zero on starting up the primary component (2).

13. Method according to one of Claims 9 to 11,
**characterized in that**
- the sum memory (13) is set to a start value, which takes account of previous use of the primary component (2), on starting up the primary component (2).

14. Method according to one of the preceding claims,
**characterized in that**
- if the primary component is a circuit breaker (2a), the description values **(M̃)** are in each case determined only while the switching contacts of the circuit breaker (2a) are open.

15. Method according to one of the preceding claims,
**characterized in that**
- if the primary component is a circuit breaker (2a), the number of switching processes carried out by the circuit breaker (2a) is also determined by the field device (5),
- an aging switching value (A) is determined from this number of switching processes, and
- the aging switching value (A) or a warning message derived from it is emitted from the field device (5) or from a data processing device (10) which is connected to the field device (5).

## Revendications

1. Procédé de détermination d'un coefficient (K₁) caractéristique d'utilisation indiquant une utilisation instantanée d'un composant d'appareil électrique d'un réseau de distribution d'énergie électrique, dans lequel on effectue les stades suivants :
- enregistrement de valeurs (M̃)de description décrivant un état de fonctionnement du composant primaire, notamment de valeurs de mesure d'une grandeur de mesure primaire, au moyen d'un capteur (3) qui est relié à un appareil (5) sur site exécutant des fonctions pour l'automatisation du réseau de distribution d'énergie, **caractérisé par**
- la détermination d'une somme globale des valeurs (M̃)de description sur la durée d'au moins un intervalle de temps qui peut être prescrit avec formation d'une valeur (K*) intermédiaire d'utilisation et
- la production du coefficient (K₁) caractéristique d'utilisation en fonction de la grandeur (K*) intermédiaire d'utilisation par rapport à une valeur limite d'utilisation pouvant être prescrite.

2. Procédé suivant la revendication 1,
**caractérisé en ce que**
- le coefficient (K1) caractéristique d'utilisation est émis par l'appareil (5) sur site ou par un dispositif informatique relié à l'appareil (5) sur site.

3. Procédé suivant la revendication 1 ou 2,
**caractérisé en ce que**
- il est produit et émis par l'appareil (5) sur site ou par un dispositif (10) informatique relié à l'appareil (5) sur site, indépendamment de la grandeur du coefficient (K₁) caractéristique d'utilisation, un signal (W₁) d'utilisation, si le coefficient (K₁) caractéristique d'utilisation indique une utilisation particulièrement petite et/ou particulièrement grande du composant (2) primaire.

4. Procédé suivant l'une des revendications précédentes,
**caractérisé en ce que**
- on utilise, pour enregistrer les valeurs (M̃) de description, un capteur déjà présent dans l'installation d'automatisation.

5. Procédé suivant l'une des revendications suivantes,
**caractérisé en ce que**
- **en ce qu'**on utilise comme valeur (M̃) de description des valeurs de mesure d'une grandeur de mesure primaire.

6. Procédé suivant la revendication 5,
**caractérisé en ce que**
- on utilise comme grandeur de mesure primaire un courant passant dans le composant 2 primaire.

7. Procédé suivant la revendication 5,
**caractérisé en ce que**
- on utilise comme grandeur de mesure primaire une tension s'appliquant au composant (2) primaire.

8. Procédé suivant la revendication 5,
**caractérisé en ce que**
- on utilise comme grandeur de mesure primaire une température du composant (2) primaire.

9. Procédé suivant l'une des revendications précédentes,
**caractérisé en ce que**
- on effectue la production du coefficient (K₁) caractéristique d'utilisation de façon répétée et
- on somme des valeurs (K*) intermédiaires d'utilisation successives dans une mémoire de somme, avec formation d'un coefficient (K) de caractéristique de vieillissement.

10. Procédé suivant la revendication 9,
**caractérisé en ce que**
- le coefficient (K) de caractéristique de vieillissement est émis par l'appareil (5) sur site ou par un dispositif (10) informatique relié à l'appareil (5) sur site.

11. Procédé suivant la revendication 9 ou 10,
**caractérisé en ce que**
- on produit indépendamment de la grandeur du coefficient (K₂) caractéristique de vieillissement un signal (W₂) de vieillissement par rapport à une valeur limite de vieillissement prescrite par l'appareil (5) sur site ou par un dispositif (10) informatique relié à l'appareil (5) sur site et
- on émet le signal (W₂) de vieillissement par l'appareil (5) sur site ou par le dispositif (10) informatique.

12. Procédé suivant l'une des revendications 9 à 11,
**caractérisé en ce que**
- on met la mémoire (13) de somme à la valeur zéro lors de la mise en fonctionnement du composant (2) primaire.

13. Procédé suivant l'une des revendications 9 à 11,
**caractérisé en ce que**
- on met la mémoire (13) de somme à une valeur de départ tenant compte d'une utilisation passée du composant (2) primaire lors de la mise en fonctionnement du composant (2) primaire.

14. Procédé suivant l'une des revendications précédentes,
**caractérisé en ce que**
- on détermine, lorsque le composant primaire est un disjoncteur (2a), les valeurs (M̃) de description respectivement seulement pendant une ouverture de contact de commutation du disjoncteur (2a).

15. Procédé suivant l'une des revendications précédentes,
**caractérisé en ce que**
- on détermine, lorsque le composant primaire est un disjoncteur (2a), par l'appareil (5) sur site également le nombre d'opérations de commutation effectuées par le disjoncteur (2a),
- on détermine à partir de ce nombre des opérations de commutation une valeur (A) de commutation de vieillissement et
- on indique la valeur (A) de commutation de vieillissement ou un signal d'alerte qui s'en déduit par l'appareil (5) sur site ou par un dispositif (10) informatique relié à l'appareil (5) sur site.
